# DEMANDE DE BREVET EUROPEEN

(11) **EP 0 559 514 A1**
(43) Date de publication de la demande: **08.09.1993**
(21) Numéro de dépôt: 93400418.5
(22) Date de dépôt: 18.02.1993
(51) Int. Cl.: B64C 25/02, B64C 25/66

(54) **Train d'atterrissage relevable**

(30) Priorité: 03.03.1992 FR 9202520
(71) Demandeur: MESSIER BUGATTI, F-78140 Velizy Villacoublay (FR)
(72) Inventeur: Derrien, Michel, F-78000 Versailles (FR); Chauvet, Dominique, F-92320 Chatillon (FR)
(74) Mandataire: Jaunez, Xavier

(57) **Abrégé**

L'invention concerne un train d'atterrissage relevable, avec caisson d'amortisseur et tige coulissante.

Conformément à l'invention, le train d'atterrissage comporte une balancine latérale (120) articulée sur le caisson (101) et équipée d'une roue (125) à son extrémité libre, ainsi que des moyens mécaniques d'accouplement (130) associés à cette balancine latérale (120), de telle façon que d'une part la descente du train déploie la balancine latérale pour que sa roue (125) complète en position train bas les roues (106) du train de roues (103) et constitue en plus un stabilisateur latéral lors du roulage de l'avion, et que d'autre part le relevage du train replie la balancine latérale (120) pour permettre un logement d'ensemble en position train haut. Il devient dès lors possible d'agencer le train d'atterrissage sous le fuselage de l'avion, ce qui permet d'obtenir des trains extrêmement courts.

## Description

La présente invention concerne les trains d'atterrissage relevables pour avions, du type à amortisseur direct, c'est-à-dire comportant un amortisseur dont le caisson est équipé d'un axe d'articulation à la structure d'avion, et dont la tige coulissante porte un train de roues.

Les trains d'atterrissage relevables de ce type, dont le train de roues peut être réalisé sous la forme d'un bogie basculant, sont essentiellement verticaux (en position train bas) afin d'éviter tout risque de coincement de la tige coulissante par suite d'efforts tranchants trop élevés exercés sur cette tige coulissante. Le positionnement latéral de ces atterrisseurs (également dénommés atterrisseurs principaux), de part et d'autre du plan longitudinal médian de l'avion, est en général choisi au niveau d'une zone déterminée de chaque voilure, à une distance suffisante du plan longitudinal médian pour que l'avion présente une stabilité latérale satisfaisante lors du roulage, en particulier lorsque la trajectoire est incurvée.

Cependant, plus on cherche à éloigner les trains de voilure du plan longitudinal médian de l'avion pour améliorer la stabilité latérale lors du roulage, plus la longueur des trains augmente (du fait de l'inclinaison des voilures par rapport à l'horizontale), ce qui a naturellement un effet direct sur le poids. De plus, la charge par roue est limitée, pour tenir compte de la résistance de la piste. Pour les gros porteurs (de masse supérieure à 250 tonnes), il est possible de prévoir deux atterrisseurs principaux de voilure à quatre roues, et un atterrisseur central à deux roues (diabolo) qui permet de mieux répartir la charge lors du roulage et du décollage.

On cherche actuellement à réduire de plus en plus le poids des structures et équipements en vue d'une performance maximale et d'une plus grande autonomie, et en particulier à utiliser des atterrisseurs aussi courts que possible. Les spécialistes savent cependant que les atterrisseurs de voilure doivent être disposés à une distance suffisante du plan longitudinal médian de l'avion pour que la stabilité latérale au roulage reste satisfaisante.

L'invention a précisément pour objet de résoudre ce problème, en concevant un train d'atterrissage relevable qui soit aussi court que possible, et qui assure une répartition des charges lors du roulage permettant de supprimer l'atterrisseur central, sans pour autant affecter la stabilité latérale de l'avion au roulage, même pour des virages serrés pris à la vitesse maximale autorisée.

L'invention a également pour objet de réaliser un train d'atterrissage relevable dont la structure et l'agencement permettent de minimiser les points d'attache sur l'avion, et de contrôler parfaitement les différents mouvements de ses composants, lors de la descente ou du relevage dudit train.

L'invention a aussi pour objet de réaliser un train d'atterrissage relevable qui puisse être équipé d'un train de roues réalisé sous la forme d'un bogie basculant.

Il s'agit plus particulièrement d'un train d'atterrissage relevable, comportant un caisson d'amortisseur équipé d'un axe d'articulation à une structure d'avion, ainsi qu'une tige d'amortisseur coulissant dans ledit caisson et en extrémité de laquelle est prévu un train de roues, caractérisé par le fait qu'il comporte une balancine latérale articulée sur le caisson, en pouvant pivoter autour d'un axe d'articulation essentiellement parallèle à un plan longitudinal médian de l'avion, et équipée d'une roue à son extrémité libre, ainsi que des moyens mécaniques d'accouplement associés à la balancine latérale, de telle façon que d'une part la descente du train déploie la balancine latérale pour que la roue de ladite balancine complète en position train bas les roues du train de roues et constitue en plus un stabilisateur latéral lors du roulage de l'avion, et que d'autre part le relevage dudit train replie la balancine latérale pour permettre un logement d'ensemble en position train haut.

La balancine latérale permet ainsi de résoudre à la fois les problèmes de répartition des charges et de stabilité latérale lorsque l'avion roule sur la piste, tout en rendant possible l'utilisation d'un train d'atterrissage très court, de sorte que ce train peut être agencé sous le fuselage de l'avion, ce qui constitue la disposition optimale lorsque l'on souhaite avoir un train aussi court que possible. Avec un tel agencement, on parvient à éviter d'avoir à percer des longerons arrières de voilures, tout en conservant l'intégrité de la quille centrale du fuselage.

De préférence, la balancine latérale est formée de deux bras articulés entre eux, dont un bras supérieur qui est articulé sur un appendice latéral du caisson, et un bras inférieur qui se termine par un arbre de roue, et les moyens mécaniques d'accouplement associés à ladite balancine comportent un système articulé agencé de telle façon que le relevage du train induise un pivotement sur environ 90° du bras inférieur par rapport au bras supérieur.

On parvient ainsi, en plus de la faible longueur du train, à une très grande compacité en position relevée.

Conformément à un mode d'exécution préféré, le système articulé comporte successivement une première bielle articulée par une rotule à un point fixe de la structure de l'avion, un premier levier coudé articulé sur un premier appendice du bras supérieur pour pivoter autour d'un premier axe parallèle à l'axe d'articulation dudit bras supérieur sur le caisson, une seconde bielle, un second levier coudé articulé sur un second appendice du bras supérieur pour pivoter autour d'un second axe qui est parallèle à l'axe d'articulation entre les bras supérieur et inférieur, et une troisième bielle articulée sur un appendice du bras inférieur, ladite seconde bielle, ledit second levier et ladite troisième bielle constituant un alignement pour les deux bras de la balancine latérale.

Un tel système permet de minimiser les points d'attache sur l'avion, sans pour autant requérir une puissance notablement plus élevée pour la manoeuvre du train d'atterrissage malgré la présence de la balancine latérale.

Avantageusement alors, la première bielle et le premier levier coudé sont articulés entre eux selon un axe qui est colinéaire à l'axe d'articulation du bras supérieur sur le caisson lorsque la balancine latérale est en position déployée, de façon à assurer la neutralité de ladite première bielle lors du roulage de l'avion.

Un tel agencement fait que cette première bielle n'intervient qu'au relevage du train d'atterrissage, et n'induit aucun mouvement parasite lors du roulage de l'avion.

De préférence encore, la troisième bielle est articulée de façon tournante sur l'appendice du bras inférieur pour tourner librement autour d'un troisième axe également parallèle à l'axe d'articulation du bras supérieur sur le caisson.

Il est par ailleurs intéressant que le train d'atterrissage comporte en outre un amortisseur associé à la balancine latérale, dont le corps est articulé sur le caisson, et dont la tige est articulée sur le bras supérieur de ladite balancine.

De préférence alors, la tige de l'amortisseur est articulée de façon tournante sur un troisième appendice du bras supérieur, pour tourner librement autour d'un axe qui est confondu avec l'axe d'articulation entre les bras supérieur et inférieur.

Avantageusement encore, la partie supérieure du caisson se prolonge, au-delà de son axe d'articulation, par un appendice d'extrémité qui est relié à la structure de l'avion par l'intermédiaire d'une courte contre-fiche articulée, ladite contre-fiche constituant, lorsqu'elle est alignée, un moyen de contreventement en position train bas et un moyen de verrouillage en position train haut.

Une telle contre-fiche constitue ainsi un progrès important au regard des trains de voilure connus, dont les contre-fiches étaient nécessairement de grande longueur. Le verrouillage de la position train haut permet en outre de supprimer le boîtier d'accrochage habituellement prévu, ce qui simplifie encore la structure et participe à l'allégement de l'avion.

De préférence alors, la courte contre-fiche est agencée pour rester dans un plan médian du caisson qui est perpendiculaire à l'axe d'articulation dudit caisson.

On parvient ainsi à éviter la création d'efforts de torsion dans le caisson, lequel est par suite moins sollicité.

Enfin, lorsqu'il s'agit d'un train d'atterrissage relevable dans lequel le train de roues est réalisé sous la forme d'un bogie à châssis basculant, il est possible de prévoir qu'une bielle télescopique de liaison soit associée au bogie basculant, de façon à assurer une mise à l'horizontale dudit bogie en position train haut, le corps de cette bielle de liaison étant articulé par une rotule à la structure de l'avion, et la tige de ladite bielle étant articulée sur le châssis basculant dudit bogie.

On conserve ainsi tous les avantages des trains d'atterrissage à bogie basculant, avec en plus les avantages inhérents à la faible longueur du train.

D'autres caractéristiques et avantages de l'invention apparaîtront plus clairement à la lumière de la description qui va suivre et des dessins annexés, concernant un mode de réalisation particulier, en référence aux figures où :
- la figure 1 est une vue en perspective illustrant un train d'atterrissage relevable conforme à l'invention, en position train bas, avec sa balancine latérale déployée (comme pour les figures suivantes, les roues sont ici représentées en transparence pour plus de clarté) ;
- la figure 2 est une vue de face du train d'atterrissage précité (sur laquelle la structure d'avion a été schématisée en traits mixtes afin d'illustrer la disposition de ce train sous le fuselage de l'avion), et la figure 3 une vue latérale, ces deux vues correspondant également à une position train bas ;
- les figures 4 et 5 sont des vues respectivement latérale et de face du train d'atterrissage précédent, en position train haut, avec sa balancine repliée pour le logement d'ensemble dans le fuselage de l'avion.

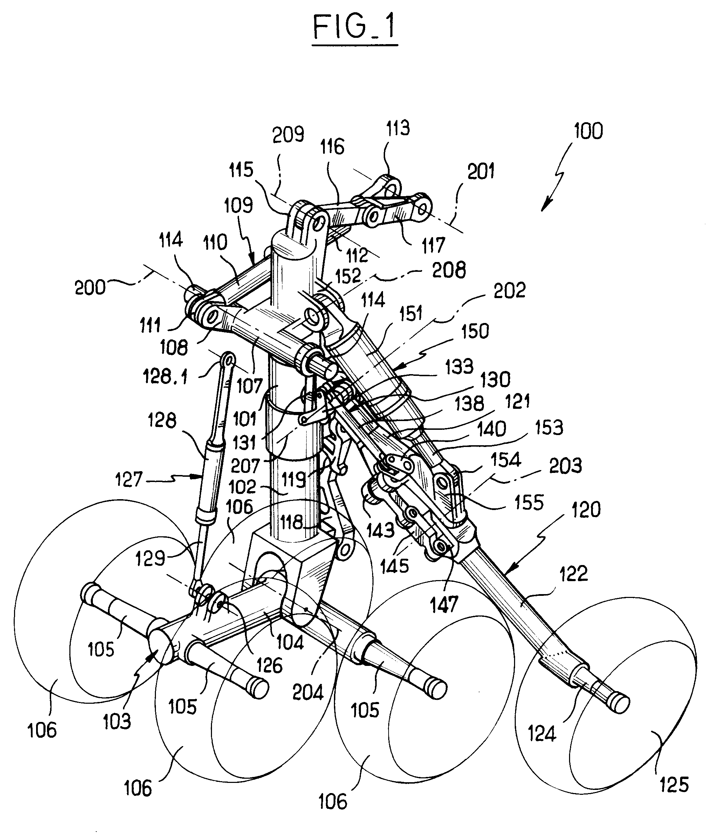

On va maintenant décrire plus en détail les divers organes constitutifs du train d'atterrissage relevable selon l'invention, en se référant aux figures 1 à 3 qui illustrent un tel train d'atterrissage équipé d'une balancine latérale, en position train bas.

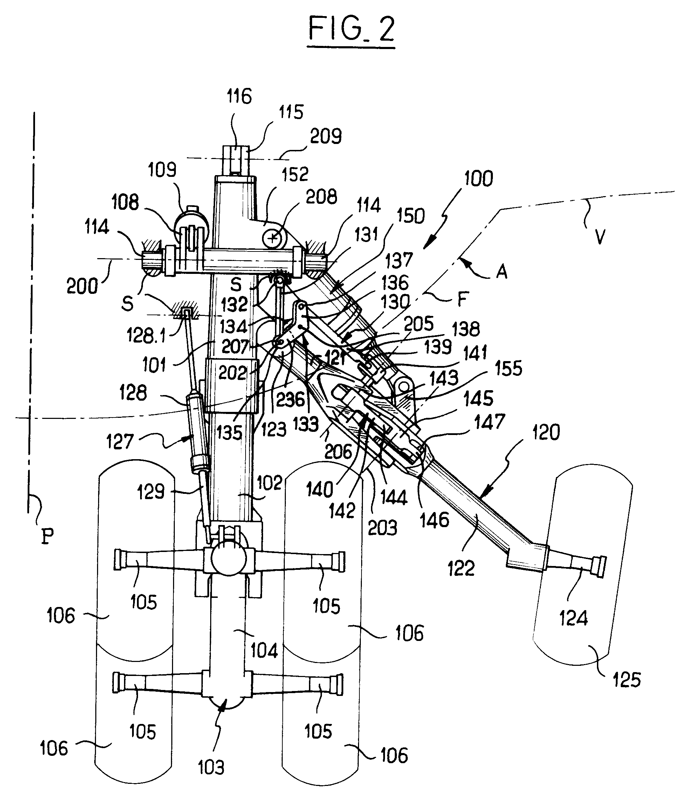

Le train d'atterrissage relevable 100 est du type à amortisseur direct, c'est-à-dire qu'il comporte un amortisseur constitué d'un caisson 101 et d'une tige coulissante 102, en extrémité de laquelle est prévu un train de roues 103. Le train de roues 103 est ici réalisé sous la forme d'un bogie dont le châssis 104 est basculant, et comporte des fusées 105 associées à deux paires de roues 106. On a noté 204 l'axe d'articulation du châssis basculant sur une chape d'extrémité inférieure de la tige coulissante 102. Le caisson d'amortisseur 101 présente une extension transversale 107 dont les deux extrémités 114 définissent l'axe d'articulation 200 à la structure de l'avion, cette structure étant partiellement représentée sur la figure 2 et référencée S. L'axe d'articulation 200 est essentiellement contenu dans un plan frontal perpendiculaire au plan longitudinal médian de l'avion. On a représenté sur la figure 2 ce plan longitudinal médian noté P, et on a esquissé en traits mixtes le contour concerné de l'avion A, avec une partie F concernant le fuselage, et une partie V concernant la voilure associée. Le train d'atterrissage 100 est ici agencé sous le fuselage F de l'avion, ce qui permet d'avoir un train extrêmement court, un tel agencement n'étant cependant rendu possible que par la présence de la balancine latérale qui complète les roues du train de roues de l'atterrisseur pour la répartition de la charge, et qui procure en outre la stabilisation nécessaire lors du roulage de l'avion. Il va de soi cependant que le train d'atterrissage relevable selon l'invention pourra en variante être agencé sous la voilure, au voisinage du fuselage de l'avion, la balancine latérale remplissant là encore les deux fonctions précitées.

Conformément à un aspect essentiel de l'invention, le train d'atterrissage 100 comporte une balancine latérale 120 articulée sur le caisson 101, en pouvant pivoter autour d'un axe d'articulation 202 essentiellement parallèle au plan longitudinal médian de l'avion, cette balancine étant équipée d'une roue 125 à son extrémité libre. Des moyens d'accouplement 130 sont par ailleurs associés à la balancine latérale 120, de telle façon que la descente du train déploie la balancine latérale pour que la roue 125 de ladite balancine complète en position train bas les roues 106 du train de roues 103, et constitue en plus un stabilisateur latéral lors du roulage de l'avion.

Plus précisément, la balancine latérale 120 est ici formée de deux bras articulés entre eux, dont un bras supérieur 121 qui est articulé sur un appendice latéral 123 du caisson 101 (l'axe d'articulation étant l'axe 202 précité), et un bras inférieur 122 qui se termine par un arbre de roue 124 dont on distingue la roue 125 associée. Le bras supérieur 121 se termine ici par une extrémité en forme de fourche entre les deux branches de laquelle vient se loger l'extrémité correspondante du bras inférieur 122. L'axe d'articulation entre ces deux bras 121 et 122 est noté 203.

Lorsque le train d'atterrissage est en position train bas, la balancine 120 est ainsi déployée en s'étendant latéralement de l'autre côté de l'atterrisseur par rapport au plan longitudinal médian de l'avion. Lorsque l'avion roule sur le sol, les roues 106 du train de roues et la roue 125 de la balancine latérale supportent la charge concernée, et, de plus, le déport latéral de la roue 125 de cette balancine procure la stabilité latérale nécessaire lorsque l'avion roule sur la piste, même pour des virages serrés pris à la vitesse maximale autorisée.

Dans la pratique, la balancine latérale sera de préférence formée de deux bras articulés entre eux, comme illustré ici, afin d'obtenir un repliage de cette balancine compatible avec la compacité demandée pour le train d'atterrissage relevable.

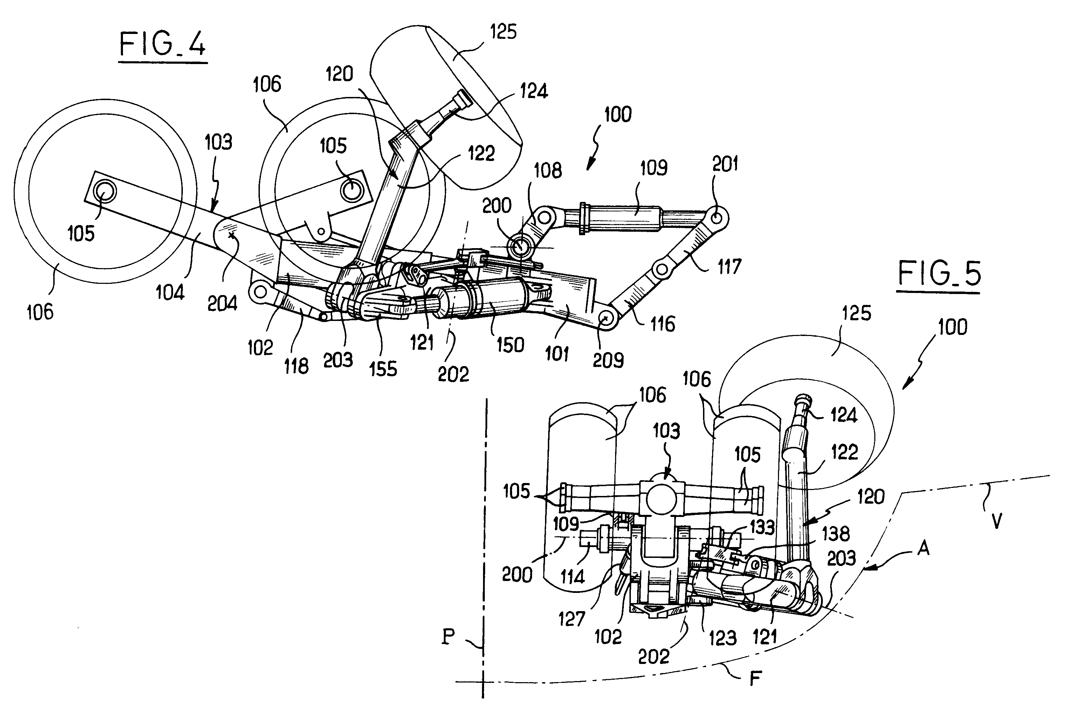

Les figures 4 et 5 illustrent ce même train d'atterrissage relevable 100, en position train haut, avec sa balancine latérale 120 repliée, ce grâce à l'agencement qui va être décrit ci-après des moyens mécaniques d'accouplement associés à ladite balancine, moyens qui sont agencés de telle façon que le relevage du train induise un pivotement sur environ 90° du bras inférieur 122 par rapport au bras supérieur 121. On notera sur la figure 5 que l'ensemble du train relevé reste extrêmement compact, et compatible avec un logement d'ensemble en position train haut dans le fuselage de l'avion. Un tel agencement permet d'éviter d'avoir à percer les longerons arrière de voilure et aussi de conserver l'intégrité de la quille centrale (non représentée ici) du fuselage.

Les moyens mécaniques d'accouplement associés à la balancine latérale 120 sont essentiellement constitués par un système articulé 130 dont on va maintenant décrire les différents organes qui forment une chaîne articulée allant de la structure de l'avion au bras inférieur de la balancine latérale.

On trouve tout d'abord une première bielle 131, qui est articulée par une rotule 132 à un point fixe de la structure de l'avion : cette articulation à la structure S de l'avion a été représentée schématiquement sur la figure 2. Cette première bielle 131 est sensiblement parallèle à l'axe du caisson d'amortisseur 101, et son autre extrémité 135 est articulée à un premier levier coudé 133. Ce levier coudé 133 est articulé sur un appendice 134 du bras supérieur 121 de la balancine latérale pour pivoter autour d'un axe 205 qui est essentiellement parallèle à l'axe d'articulation 202 de ce bras supérieur sur le caisson 101. Le levier coudé 133 comporte, d'un côté de l'axe 205, une branche 236 articulée en son extrémité avec l'extrémité 135 de la première bielle 131, et, de l'autre côté de l'axe 205, une deuxième branche 136 articulée en son extrémité à une seconde bielle 138, par l'extrémité 137 de cette dernière bielle. La bielle 138 est disposée le long du bras supérieur 121 de la balancine latérale avec un débattement latéral possible au niveau de son articulation au levier coudé 133. L'autre extrémité 139 de cette seconde bielle 138 est articulée à un second levier coudé 140 qui est articulé sur un second appendice 143 du bras supérieur 121, pour pivoter autour d'un axe 206 qui est parallèle à l'axe d'articulation 203 entre les deux bras 121 et 122 de la balancine latérale. Ce second levier coudé 140 comporte deux branches qui sont ici décalées, ce qui n'est naturellement nullement obligatoire, dont une première branche 141 qui est articulée à la seconde bielle 138, et une deuxième branche 142 passant entre les deux branches du bras supérieur 121, et dont l'extrémité 144 est articulée à une troisième bielle 145, qui est articulée sur un appendice 147 du bras inférieur 122 de la balancine latérale.

Il va de soi que l'on pourrait remplacer ce type d'embiellage par d'autres systèmes articulés, dès lors que le repliage de la balancine latérale serait encore compatible avec la compacité désirée.

Cependant, l'agencement illustré ici présente un certain nombre d'avantages qui seront notés ci-après.

Tout d'abord, on parvient à minimiser les points d'attache sur l'avion, dans la mesure où le système articulé n'est relié qu'à un seul point de la structure d'avion, en l'espèce la rotule 132 d'articulation associée à la première bielle 131. De plus, la première bielle 131 et le premier levier coudé 133 sont articulés entre eux selon un axe 207 qui est colinéaire à l'axe d'articulation 202 du bras supérieur 121 sur le caisson 101 lorsque la balancine latérale 120 est en position déployée, comme cela est illustré sur les figures 1 à 3. De cette façon, on parvient à assurer la totale neutralité de cette première bielle 131 lors du roulage de l'avion, de sorte que cette bielle n'induit aucun mouvement parasite lors du roulage de l'avion, et n'intervient en réalité que lors du relevage du train d'atterrissage.

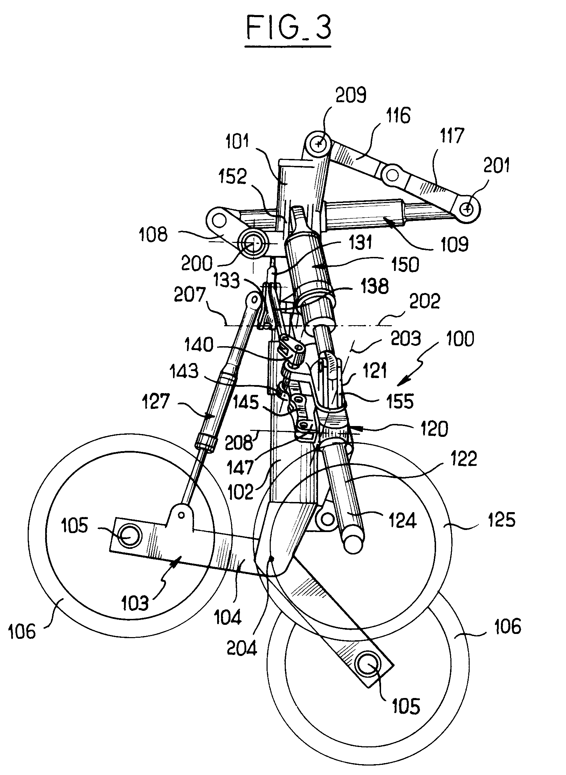

De préférence encore, la troisième bielle 145 est articulée de façon tournante sur l'appendice 147 du bras inférieur 122, pour tourner librement autour d'un axe 208 (mieux visible sur la figure 3) qui est également parallèle à l'axe d'articulation 202 du bras supérieur 121 sur le caisson 101. La branche 142 du second levier coudé 140 et la troisième bielle 145 constituent ainsi une contre-fiche d'alignement pour la balancine latérale 120, alignement qui est brisé lors du relevage du train grâce à l'autre branche de ce levier coudé 140, par l'action de la première bielle 131, du premier levier coudé 133, et de la seconde bielle 138.

Il est par ailleurs intéressant de prévoir en outre un amortisseur 150 associé à la balancine latérale 120, pour coopérer avec cette balancine lors du roulage de l'avion, en amortissant les vibrations auxquelles est soumise ladite balancine.

Toujours dans le but de minimiser les points d'attache sur l'avion, il est intéressant de monter l'amortisseur de balancine entre cette balancine et le caisson d'amortisseur du train d'atterrissage. Ainsi, comme cela est visible sur les figures 1 à 3, l'amortisseur 150 comporte un corps 151 qui est articulé selon un axe 208 sur le caisson 101 par un appendice latéral 152 dudit caisson, et une tige 153 qui est articulée par son extrémité 154 sur un appendice saillant 155 solidaire de l'une des branches d'extrémité du bras supérieur 121 de la balancine latérale 120. Pour l'articulation du corps de vérin au caisson 101, l'axe concerné (axe 208) est essentiellement parallèle à l'axe d'articulation 202 de la balancine latérale sur le caisson 101, avec toutefois possibilité d'un certain débattement latéral ; pour la tige 153 de l'amortisseur 150, il peut s'avérer intéressant que l'extrémité 154 de ladite tige soit articulée de façon tournante sur l'appendice 155 du bras supérieur 121, pour tourner librement autour d'un axe qui est confondu avec l'axe d'articulation 203 entre le bras supérieur 121 et le bras inférieur 122 de la balancine latérale.

On distingue par ailleurs, pour l'actionnement du train d'atterrissage relevable, un vérin de manoeuvre 109 dont la tige 110 est articulée par son extrémité 111 sur un appendice saillant 108 de l'extension 107 qui est solidaire du caisson 101. Le corps 112 du vérin de manoeuvre 109 est quant à lui articulé par son extrémité arrière 113 sur la structure de l'avion, au niveau d'un axe noté 201. La partie supérieure du caisson 101 se prolonge en outre, au-delà de son axe d'articulation 200, par un appendice d'extrémité 115 qui est relié à la structure de l'avion par l'intermédiaire d'une courte contre-fiche articulée constituée par deux bras 116 et 117. Le bras 116 est articulé sur le caisson 101 autour d'un axe 209 qui est parallèle à l'axe d'articulation 200 du caisson, et le bras 117 est de préférence articulé sur un axe qui est colinéaire à l'axe 201 associé au corps du vérin de manoeuvre 109. Les deux bras 116 et 117 de cette contre-fiche articulée sont dans le prolongement l'un de l'autre lorsque le train d'atterrissage est en position train bas (comme cela est visible sur les figures 1 et 3), mais aussi lorsque ledit train est en position train haut (comme cela est visible sur la figure 4). Ainsi, cette courte contre-fiche constitue, lorsqu'elle est alignée, à la fois un moyen de contreventement en position train bas, et un moyen de verrouillage en position train haut. Une telle contrefiche représente ainsi un progrès important au regard des contre-fiches de grande longueur habituellement prévues pour les trains de voilures connus, lesquelles contre-fiches n'avaient qu'un rendement médiocre. En l'espèce, la contrefiche est très courte, et peu chargée, et, de plus, le verrouillage qu'elle procure pour la position train haut permet de supprimer le boîtier d'accrochage habituellement prévu, ce qui simplifie encore la structure et participe à l'allégement de l'avion. De préférence, cette courte contre-fiche est agencée pour rester dans un plan médian du caisson 101 qui est perpendiculaire à l'axe d'articulation 200 dudit caisson. De cette façon, on évite de générer des efforts de torsion dans le caisson d'amortisseur, lequel est par suite moins sollicité. Par ailleurs, la contre-fiche précitée pourra être équipée d'un moyen de verrouillage (non représenté ici), tel qu'un alignement complémentaire de type conventionnel.

En partie basse du train d'atterrissage 100, on reconnaît un compas d'alignement associé à la tige coulissante 102, et composé d'un bras inférieur 118 et d'un bras supérieur 119, conformément à une technique bien connue.

Bien que cela ne constitue aucunement une limitation dans le cadre de cette invention, le train de roues 103 du train d'atterrissage relevable 100 est ici réalisé sous la forme d'un bogie à châssis basculant (ou poutre basculante) 104. Une bielle télescopique de liaison 127 peut être alors associée au bogie basculant, de façon à assurer une mise à l'horizontale dudit bogie en position train haut, ainsi que cela est mieux visible sur les figures 4 et 5. Cette bielle de liaison 127 comporte un corps 128 en extrémité duquel une rotule 128.1 est prévue pour l'articulation à la structure de l'avion (le détail de structure S a été schématisé sur la figure 2). La bielle de liaison 127 comporte une tige qui est quant à elle articulée sur le châssis basculant 104, par des appendices associés 126.

On conserve ainsi tous les avantages des trains d'atterrissage à bogie basculant, avec en plus les avantages inhérents à la faible longueur du train. Ainsi que cela est visible sur la figure 2, la rotule d'articulation 128.1 sera articulée au niveau du fuselage de l'avion lorsque le train d'atterrissage est agencé comme illustré sur les figures.

L'invention n'est pas limitée au mode de réalisation qui vient d'être décrit, mais englobe au contraire toutes variantes reprenant, avec des moyens équivalents, les caractéristiques essentielles énoncées plus haut.

## Revendications

1. Train d'atterrissage relevable, comportant un caisson d'amortisseur équipé d'un axe d'articulation à une structure d'avion, ainsi qu'une tige d'amortisseur coulissant dans ledit caisson et en extrémité de laquelle est prévu un train de roues, caractérisé par le fait qu'il comporte une balancine latérale (120) articulée sur le caisson (101), en pouvant pivoter autour d'un axe d'articulation (202) essentiellement parallèle à un plan longitudinal médian (P) de l'avion, et équipée d'une roue (125) à son extrémité libre, ainsi que des moyens mécaniques d'accouplement (130) associés à la balancine latérale (120), de telle façon que d'une part la descente du train déploie la balancine latérale (120) pour que la roue (125) de ladite balancine complète en position train bas les roues (106) du train de roues (103) et constitue en plus un stabilisateur latéral lors du roulage de l'avion, et que d'autre part le relevage dudit train replie la balancine latérale (120) pour permettre un logement d'ensemble en position train haut.

2. Train d'atterrissage selon la revendication 1, caractérisé par le fait que la balancine latérale (120) est formée de deux bras articulés entre eux (121, 122), dont un bras supérieur (121) qui est articulé sur un appendice latéral (123) du caisson (101), et un bras inférieur (122) qui se termine par un arbre de roue (124), et que les moyens mécaniques d'accouplement associés à ladite balancine comportent un système articulé (130) agencé de telle façon que le relevage du train induise un pivotement sur environ 90° du bras inférieur (122) par rapport au bras supérieur (121).

3. Train d'atterrissage selon la revendication 2, caractérisé par le fait que le système articulé (130) comporte successivement une première bielle (131) articulée par une rotule (132) à un point fixe de la structure de l'avion, un premier levier coudé (133) articulé sur un premier appendice (134) du bras supérieur (121) pour pivoter autour d'un premier axe (205) parallèle à l'axe d'articulation (202) dudit bras supérieur sur le caisson (101), une seconde bielle (138), un second levier coudé (140) articulé sur un second appendice (143) du bras supérieur (121) pour pivoter autour d'un second axe (206) qui est parallèle à l'axe d'articulation (203) entre les bras supérieur (121) et inférieur (122), et une troisième bielle (145) articulée sur un appendice (147) du bras inférieur (122), ladite seconde bielle, ledit second levier coudé et ladite troisième bielle constituant un alignement pour les deux bras (121, 122) de la balancine latérale (120).

4. Train d'atterrissage selon la revendication 3, caractérisé par le fait que la première bielle (131) et le premier levier coudé (133) sont articulés entre eux selon un axe (207) qui est colinéaire à l'axe d'articulation (202) du bras supérieur (121) sur le caisson (101) lorsque la balancine latérale (120) est en position déployée, de façon à assurer la neutralité de ladite première bielle lors du roulage de l'avion.

5. Train d'atterrissage selon la revendication 3 ou 4, caractérisé par le fait que la troisième bielle (145) est articulée de façon tournante sur l'appendice (147) du bras inférieur (122) pour tourner librement autour d'un troisième axe (208) également parallèle à l'axe d'articulation (202) du bras supérieur (121) sur le caisson (101).

6. Train d'atterrissage selon l'une des revendications 2 à 5, caractérisé par le fait qu'il comporte en outre un amortisseur (150) associé à la balancine latérale (120), dont le corps (151) est articulé sur le caisson (101), et dont la tige (153) est articulée sur le bras supérieur (121) de ladite balancine.

7. Train d'atterrissage selon les revendications 3 et 6, caractérisé par le fait que la tige (153) de l'amortisseur (150) est articulée de façon tournante sur un troisième appendice (155) du bras supérieur (121), pour tourner librement autour d'un axe qui est confondu avec l'axe d'articulation (203) entre les bras supérieur (121) et inférieur (122).

8. Train d'atterrissage selon l'une des revendications 1 à 7, caractérisé par le fait que la partie supérieure du caisson (101) se prolonge, au-delà de son axe d'articulation (200), par un appendice d'extrémité (115) qui est relié à la structure de l'avion par l'intermédiaire d'une courte contre-fiche articulée (116, 117), ladite contre-fiche constituant, lorsqu'elle est alignée, un moyen de contreventement en position train bas et un moyen de verrouillage en position train haut.

9. Train d'atterrissage selon la revendication 8, caractérisé par le fait que la courte contre-fiche (116, 117) est agencée pour rester dans un plan médian du caisson (101) qui est perpendiculaire à l'axe d'articulation (200) dudit caisson.

10. Train d'atterrissage selon l'une des revendications 1 à 9, dans lequel le train de roues (103) est réalisé sous la forme d'un bogie à châssis basculant (104), caractérisé par le fait qu'une bielle télescopique de liaison (127) est associée au bogie basculant, de façon à assurer une mise à l'horizontale dudit bogie en position train haut, le corps (128) de cette bielle de liaison (127) étant articulé par une rotule (128.1) à la structure de l'avion, et la tige (129) de ladite bielle étant articulée sur le châssis basculant (104) dudit bogie.
